# EUROPÄISCHE PATENTSCHRIFT

(11) **EP 2 942 217 B1**
(45) Veröffentlichungstag und Bekanntmachung des Hinweises auf die Patenterteilung: **07.11.2018**
(21) Anmeldenummer: 15166612.0
(22) Anmeldetag: 06.05.2015
(51) Int. Cl.: B60J 1/20, E06B 9/42, E06B 9/54, E06B 9/60, E06B 9/80, E06B 9/90, E06B 9/24, E06B 9/40

(54) **FENSTERROLLO**
WINDOW ROLLER BLIND
STORE DE FENÊTRE

(30) Priorität: 07.05.2014 DE 202014003778 U
(43) Veröffentlichungstag der Anmeldung: 11.11.2015
(73) Patentinhaber: B & T Exact GmbH, 58285 Gevelsberg (DE)
(72) Erfinder: Teunissen, Christian, 58239 Schwerte (DE); Möller, Klaus, 58256 Ennepetal (DE)
(74) Vertreter: Isfort, Olaf

(56) Entgegenhaltungen:
- EP-A1- 1 911 620
- EP-A2- 1 415 833
- WO-A1-2006/086965
- DE-A1-102005 031 979
- JP-A- 2011 063 093
- US-A- 863 395
- US-A1- 2007 187 977

## Beschreibung

Die Erfindung betrifft ein Fensterrollo mit einem zwei seitliche Führungsprofile aufweisenden Rahmen, einer am oberen Rahmenende angeordneten ersten Wickelwelle, einer auf der ersten Wickelwelle aufgewickelten ersten Rollobahn, einem am freien Ende der ersten Rollobahn angeordneten ersten Zugstab, der an den Führungsprofilen beweglich geführt ist und wenigstens ein erstes Bremselement aufweist, das zur Festlegung des ersten Zugstabes in einer gewünschten, beliebigen Position lösbar an wenigstens einem der Führungsprofile angreift, einer am unteren Rahmenende angeordneten zweiten Wickelwelle, einer auf der zweiten Wickelwelle aufgewickelten zweiten Rollobahn und einem am freien Ende der zweiten Rollobahn angeordneten zweiten Zugstab, der, wie der erste Zugstab, an den Führungsprofilen beweglich geführt ist, wobei eine Koppeleinrichtung den ersten Zugstab lösbar an den zweiten Zugstab koppelt, wobei die Koppeleinrichtung ein am ersten Zugstab angeordnetes erstes Rastelement aufweist, das in ein dazu korrespondierendes, am zweiten Zugstab angeordnetes zweites Rastelement lösbar eingreift, wobei das erste und das zweite Rastelement durch Drehung des ersten und/oder des zweiten Zugstabes um dessen jeweilige Längsachse miteinander in Eingriff bringbar sind. Derartige Fensterrollos sind beispielsweise aus WO 2006 / 086965 A1 bekannt.

Fensterrollos werden z.B. für Fenster in Campingfahrzeugen oder in Fahrerhäusern von LKWs verwendet. Dabei kann eine der beiden Rollobahnen aus ganz oder teilweise intransparentem Material bestehen, so dass das Fensterrollo zur Verdunkelung (Sonnenschutz) nutzbar ist. Die andere Rollobahn kann aus einem Netzmaterial mit geeigneter Maschenweite bestehen, so dass das Fensterrollo bei geöffnetem Fenster als Insektenschutz (Moskitonetz) nutzbar ist. Das Fensterrollo hat damit eine Doppelfunktion. Jede der Funktionen kann wahlweise nach Bedarf genutzt werden, je nachdem wie weit die jeweilige Rollobahn ausgerollt wird. Dabei ist es auch möglich, eine oder beide Rollobahnen nur teilweise auszurollen, so dass z.B. ein Teil des Fensters verdunkelt ist und der andere Teil durch das Moskitonetz abgedeckt ist.

Nachteilig ist bei den bekannten Fensterrollos, dass diese etwas umständlich handzuhaben sind. Um z.B. zwischen der Verdunkelungsfunktion und der Insektenschutzfunktion zu wechseln, muss zunächst die eine Rollobahn aufgewickelt und dann die andere Rollobahn abgewickelt werden. Es sind also zwei Handhabungsschritte erforderlich. Zudem besteht der Nachteil, dass der Zugstab der dem Insektenschutz dienenden Rollobahn bei unaufmerksamer Bedienung nicht spaltfrei bis an den Zugstab der anderen Rollobahn bewegt wird, so dass ggf. Insekten durch das Fenster eindringen können.

Von besonderem Nachteil ist, dass bekannte Koppeleinrichtungen, welche den ersten Zugstab lösbar an den zweiten Zugstab koppeln, umständlich zu handhaben sind. Eine definierte Drehbewegung für die Drehung des ersten und/oder des zweiten Zugstabes um dessen jeweilige Längsachse wird hier nicht vorgegeben, sodass das Verbinden der an den Zugstäben angeordneten Rastelemente durch Drehung eine hohe Geschicklichkeit erfordert. Auch das gemeinsame Bewegen der miteinander gekoppelten Zugstäbe ist nur schwer möglich, da die Zugstäbe durch Bremselemente separat festgelegt sind.

Vor diesem Hintergrund ist es Aufgabe der Erfindung, ein verbessertes Fensterrollo bereit zu stellen.

Diese Aufgabe löst die Erfindung ausgehend von einem Fensterrollo der eingangs angegebenen Art dadurch, dass durch die Drehung des ersten und/oder des zweiten Zugstabes um dessen jeweilige Längsachse in einer ersten Drehrichtung das erste und das zweite Rastelement miteinander in Eingriff bringbar sind, wobei die Bremswirkung durch die Drehung des ersten und/oder zweiten Zugstabes um dessen jeweilige Längsachse aufhebbar ist, wobei die Drehung des ersten und/oder des zweiten Zugstabes in der ersten Drehrichtung gleichzeitig die Bremswirkung aufhebt. Mit der Vorgabe einer Drehbewegung in der ersten Drehrichtung kann durch die Koppeleinrichtung eine einfache Kopplung des ersten Zugstabes mit dem zweiten Zugstab erreicht werden. Weiterhin wird bei Drehung des Zugstabes in der ersten Drehrichtung, die Bremswirkung aufgehoben. Die miteinander in Eingriff bringbaren Rastelemente an den Zugstäben verbleiben hierdurch unter Aufhebung der Bremswirkung im Eingriff, was Voraussetzung dafür ist, dass die beiden Zugstäbe einfach und leicht gemeinsam bewegt werden können, ohne dass die Kopplung des ersten Zugstabes an den zweiten Zugstab gelöst wird.

Gemäß der Erfindung ist mittels der Koppeleinrichtung der erste Zugstab lösbar an den zweiten Zugstab koppelbar. Im angekoppelten Zustand können beide Zugstäbe gemeinsam bewegt werden. Hierzu reicht es aus, einen der beiden Zugstäbe, der hierzu mit einer geeigneten Handhabe versehen sein kann, in Längsrichtung der Rollobahn, d.h. nach oben oder unten zu bewegen. Der andere Zugstab wird dabei automatisch mitbewegt. Dies ermöglicht es vorteilhaft, mit nur einem Bedienungsschritt zwischen zwei Funktionen des Fensterrollos zu wechseln, beispielsweise zwischen einer Verdunkelungsfunktion und einer Insektenschutzfunktion. Die beiden aneinander gekoppelten Zugstäbe liegen vorzugsweise spaltfrei aneinander an. Somit wird zuverlässig vermieden, dass, z.B. aufgrund eines Bedienungsfehlers, ein Spalt verbleibt, durch den Insekten eindringen können.

Bei einer bevorzugten Ausgestaltung des erfindungsgemäßen Fensterrollos weisen beide Zugstäbe, das heißt der erste Zugstab und der zweite Zugstab jeweils ein Bremselement auf. In diesem Fall können der erste und der zweite Zugstab, unabhängig davon, ob diese aneinander gekoppelt sind oder nicht, in jeder beliebigen Position durch Festlegung an wenigstens einem der Führungsprofile arretiert werden. Dies hat auch den Vorteil, dass verhindert werden kann, dass der zweite Zugstab mit der zweiten Rollobahn unkontrolliert zurückschnellt, wenn der zweite Zugstab unvorsichtig von dem ersten Zugstab abgekoppelt wird.

Bei einer praktischen Ausgestaltung ist die Bremswirkung durch eine Drehung des ersten und/oder zweiten Zugstabes um dessen jeweilige Längsachse aufhebbar. Dies ermöglicht eine besonders einfache und intuitive Bedienung. Zur Aufhebung der Arretierung muss der jeweilige Zugstab lediglich etwas um seine Längsachse verdreht werden. Hierzu kann vorteilhaft eine in Bezug auf die Längsachse radial von dem Zugstab abstehende Handhabe genutzt werden, die der Benutzer des Fensterrollos ergreift und etwas nach oben oder nach unten verdreht, um die Arretierung aufzuheben. Gleichzeitig dient die Handhabe dazu, den Zugstab beim Auf- oder Abwickeln der Rollobahn zu halten und diese dabei aufwärts oder abwärts zu bewegen, bis zu der gewünschten Position, in der der Zugstab wieder arretiert werden soll. Zum erneuten Arretieren muss die Handhabe lediglich losgelassen werden.

Bei einer bevorzugten Ausgestaltung des erfindungsgemäßen Fensterrollos umfasst das erste und/oder das zweite Bremselement jeweils wenigstens einen am Ende des ersten bzw. zweiten Zugstabes angeordneten Bremsklotz, der die Bremswirkung durch Reibung an der Innenseite des als Hohlprofil ausgebildeten Führungsprofils erzeugt. Besonders bevorzugt sind an beiden Enden beider Zugstäbe Bremsklötze vorgesehen. Mittels Bremsklötzen, die an der Innenseite des Hohlprofils angreifen, lässt sich das Bremselement konstruktiv besonders einfach realisieren. Beispielsweise kann der Bremsklotz jeweils auf der Längsachse des ersten bzw. zweiten Zugstabes angeordnet sein und eine längliche Formgebung aufweisen, derart dass, quer zur Längsachse des Zugstabes gesehen, die Länge des Bremsklotzes größer und die Breite des Bremsklotzes kleiner ist als das Innenmaß des Hohlprofils. Je nach Drehstellung des jeweiligen Zugstabes liegt der Bremsklotz mit Bremswirkung an der Innenseite des Hohlprofils an oder ist darin frei beweglich. Besonders geeignet ist eine trapezförmige oder ellipsoide Formgebung des Bremsklotzes. Der Bremsklotz kann gleichzeitig zur Führung des Zugstabes am Führungsprofil dienen.

Bei einer weiter bevorzugten Ausgestaltung des erfindungsgemäßen Fensterrollos ist eine auf die erste Wickelwelle einwirkende erste Aufwickelfeder vorgesehen, deren Federkraft die erste Rollobahn spannt. Außerdem sollte eine zweite Aufwickelfeder vorgesehen sein, die auf die zweite Wickelwelle einwirkt und die zweite Rollobahn spannt. Federmechanismen zum selbsttätigen Aufwickeln von Rollobahnen sind allgemein üblich. Die Aufwickelfeder der jeweiligen Wickelwelle wird beim Abrollen der Rollobahn gespannt. Beim Aufrollen muss lediglich der Zugstab in der entsprechenden Drehstellung gehalten werden, die Rollobahn bleibt durch die Federkraft der Aufwickelfeder beim Aufwickelvorgang gespannt.

Bei einer weiter bevorzugten Ausgestaltung des erfindungsgemäßen Fensterrollos ist die erste Rollobahn am Außenumfang des ersten Zugstabes und die zweite Rollobahn am Außenumfang des zweiten Zugstabes befestigt, wobei die erste und zweite Rollobahn bezüglich des Querschnitts des jeweiligen Zugstabes im Wesentlichen tangential verlaufen. Die unter Federspannung stehende Rollobahn, die tangential am Zugstab angreift, übt auf diesen entsprechend ein Drehmoment aus. Dieses Drehmoment wirkt in derjenigen Drehrichtung, in der das jeweilige Bremselement bremsend am Führungsprofil angreift. Die Aufwickelfeder bewirkt somit, anders ausgedrückt, dass der jeweilige Zugstab automatisch über die Bremselemente bremst, so dass die Rollobahn und der zugehörigen Zugstab in der gewünschten Position arretiert bleiben. Zum Auf- oder Abwickeln der Rollobahn muss zunächst die Bremswirkung durch Drehung des Zugstabes entgegen der Federkraft der Aufwickelfeder aufgehoben werden. Da somit bei der Betätigung des Fensterrollos die zu bewegenden Zugstangen verkippt werden, werden Fensterrollos der erfindungsgemäßen Art auch als "Kipprollo" bezeichnet.

Erfindungsgemäß weist die Koppeleinrichtung ein am ersten Zugstab angeordnetes erstes Rastelement auf, das in ein dazu korrespondierendes, am zweiten Zugstab angeordnetes zweites Rastelement lösbar eingreift. Derartige Rastelemente können durch geeignete Profilierung des Zugstabes gebildet sein. Sie können zum Beispiel, quer zur Längsachse des jeweiligen Zugstabes gesehen, hakenförmig ausgebildet sein und ermöglichen eine besonders einfache und kostengünstige praktische Realisierung des erfindungsgemäßen Fensterrollos. Gleichzeitig wird durch hakenförmig ausgebildete Rastelemente erreicht, dass das erste und das zweite Rastelement durch einfache Drehung eines Zugstabes um dessen jeweilige Längsachse in einer ersten Drehrichtung miteinander in Eingriff bringbar sind. Die Rastelemente sind erfindungsgemäß so ausgestaltet, dass die Drehung des Zugstabes in der ersten Drehrichtung gleichzeitig die Bremswirkung aufhebt. Die Rastelemente können so ausgebildet sein, dass eine weitere Drehung des Zugstabes, d.h. über diejenige Stellung, in der Bremswirkung aufgehoben wird, hinaus die Rastelemente außer Eingriff bringt. Bei Drehung des Zugstabes in derjenigen Richtung, in der die Bremswirkung aufgehoben wird, verbleiben die beiden Rastelemente jedenfalls zunächst im Eingriff. Dies ist Voraussetzung dafür, dass die beiden Zugstäbe gemeinsam bewegt werden können, ohne dass die Kopplung des ersten Zugstabes an den zweiten Zugstab gelöst wird.

Ausführungsbeispiele der Erfindung werden im Folgenden anhand der Zeichnungen näher erläutert. Es zeigen:
- Figur 1: Draufsicht auf ein erfindungsgemäßes Fensterrollo;
- Figur 2: Schnitt A-A gemäß Figur 1;
- Figur 3: Schnitt B-B gemäß Figur 1.

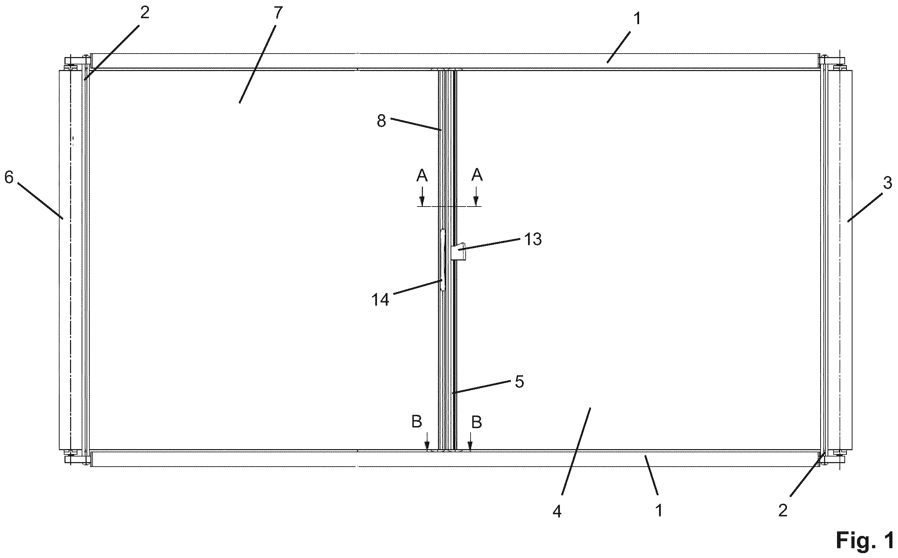

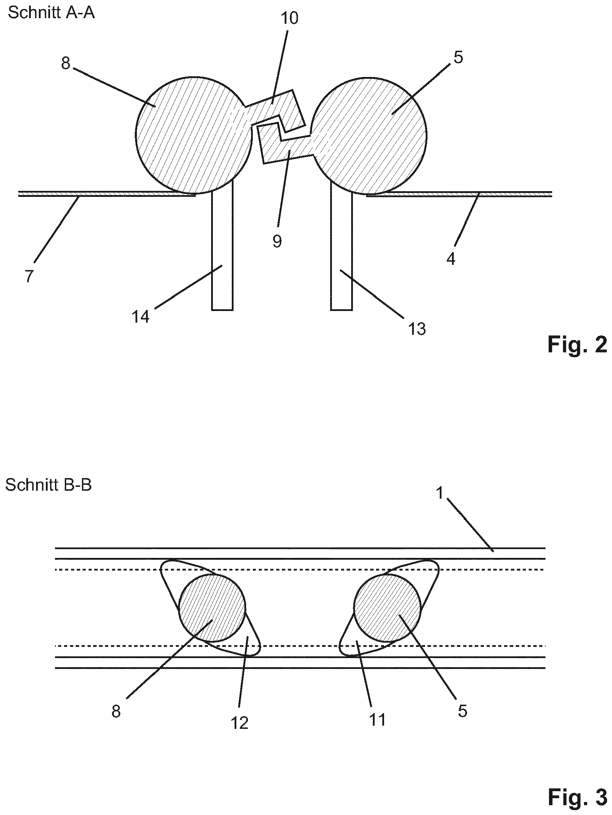

Das in Figur 1 dargestellte Fensterrollo weist zwei seitliche Führungsprofile 1 auf, die am unteren Ende (in Figur 1 links) und am oberen Ende (in Figur 1 rechts) jeweils über eine Stange 2 miteinander verbunden sind. Die Führungsprofile 1 und die Stangen 2 bilden den Rahmen des Fensterrollos. Am oberen Ende des Rahmens ist eine erste Wickelwelle 3 angeordnet, auf der eine erste Rollobahn 4 aufgewickelt ist. Die Rollobahn 4 besteht aus einem weitgehend lichtundurchlässigen Material und dient entsprechend der Verdunkelung. Am freien Ende der ersten Rollobahn 4 ist ein erster Zugstab 5 angeordnet, der an den Führungsprofilen 1 beweglich geführt ist. Gleichzeitig weist der erste Zugstab 5 ein erstes Bremselement auf (siehe Figur 3), das zur Festlegung des ersten Zugstabes 5 in einer gewünschten Position lösbar an den Führungsprofilen 5 angreift. Am unteren Rahmenende ist eine zweite Wickelwelle 6 angeordnet, auf der eine zweite Rollobahn 7 aufgewickelt ist. Bei der zweiten Rollobahn 7 handelt es sich um ein Netz geeigneter Maschenweite, das als Insektenschutz dient. Auch der zweite Zugstab 8 weist ein Bremselement, nämlich ein zweites Bremselement auf (siehe Figur 3), das zur Festlegung des zweiten Zugstabes 8 in einer gewünschten Position lösbar an wenigstens einem der Führungsprofile 1 angreift.

Gemäß der Erfindung ist eine Koppeleinrichtung vorgesehen, die den ersten Zugstab 5 lösbar an den zweiten Zugstab 8 koppelt. Dies ist in Figur 2 dargestellt. Die Koppeleinrichtung umfasst ein an den ersten Zugstab 5 angeformtes erstes hakenförmiges Rastelement 9, das in ein dazu korrespondierendes, an den zweiten Zugstab 8 angeformtes und ebenfalls hakenförmiges zweites Rastelement 10 lösbar eingreift. Wie in Figur 2 zu erkennen ist, wird das erste Rastelement 9 durch Drehung des ersten Zugstabes 5 um dessen Längsachse in einer ersten Drehrichtung (in Figur 2 nach rechts, d.h. im Uhrzeigersinn) mit dem zweiten Rastelement 10 in Eingriff gebracht. Durch Drehung des zweiten Zugstabes 8 um dessen Längsachse in der entgegengesetzten Drehrichtungen (also in Figur 2 nach links, d.h. gegen den Uhrzeigersinn) wird der Eingriff der Rastelemente 9, 10 und damit die Ankopplung der beiden Zugstäbe 5, 8 aneinander aufgehoben.

Die Schnittdarstellung gemäß Figur 3 zeigt die im Endbereich verjüngten Zugstäbe 5, 8, an denen jeweils ein Bremsklotz 11, 12 angeordnet ist. Die Bremsklötze 11, 12 sind Bestandteil der Bremselemente der beiden Zugstäbe 5, 8 und erzeugen die Bremswirkung durch Reibung an der Innenseite des als Hohlprofil ausgebildeten Führungsprofils 1. Die Bremsklötze 11, 12 sind auf der Längsachse des jeweiligen Zugstabes 5, 8 angeordnet und weisen eine längliche Formgebung auf. Wie die Figur 3 zeigt, ist die Länge jedes Bremsklotzes 11, 12 größer und die Breite kleiner als das Innenmaß des Hohlprofils. In der in Figur 3 dargestellten Drehstellung liegen die Bremsklötze 11, 12 an der Innenseite des Hohlprofils 1 an und erzeugen entsprechend die Bremswirkung. Bei Drehung bzw. Kippung des Zugstabes 5 bei dem dargestellten Ausführungsbeispiel nach rechts wird die Bremswirkung aufgehoben. Zur Aufhebung der Bremswirkung muss entsprechend der linke Zugstab 8 links herum gedreht bzw. gekippt werden.

In die Wickelwellen 3, 6 sind Aufwickelfedern (nicht dargestellt) integriert, deren Federkraft die jeweilige Rollobahn 4, 7 spannt. Wie in Figur 2 zu erkennen ist, ist die erste Rollobahn 4 am Außenumfang des ersten Zugstabes 5 und die zweite Rollobahn 7 am Außenumfang des zweiten Zugstabes 8 befestigt. Die erste und die zweite Rollobahn 4, 7 verlaufen im Wesentlichen tangential bezüglich des Querschnitts des jeweiligen Zugstabes 5, 8. Die Federkräfte der Aufwickelfedern üben über die Rollobahnen 4, 7 auf die Zugstäbe 5, 8 jeweils ein Drehmoment aus. Dieses wirkt bei dem ersten Zugstab 5 in Richtung einer Linksdrehung und bei dem zweiten Zugstab 8 in Richtung einer Rechtsdrehung. Anhand der Figur 3 ist zu erkennen, dass dieses Drehmoment bewirkt, dass die Bremsklötze 11, 12 an der Innenseite des Hohlprofils 1 anliegen und somit die Bremswirkung eintritt. An den Zugstäben 5, 8 sind Handhaben 13, 14 vorgesehen, die zum Verschieben des jeweiligen Zugstabes 5, 8 sowie zur Ausführung einer Drehbewegung, d.h. zum Verkippen des jeweiligen Zugstabes 5, 8 dienen. Durch Bewegen der Handhabe 13 an ihrem freien Ende nach links (siehe Figur 2) wird eine Drehbewegung des ersten Zugstabes 5 nach rechts bewirkt. Diese Drehung erfolgt entgegen der über die Rollobahn 5 wirkenden Federkraft der Aufwickelfeder. Durch die Drehung nach rechts wird die Bremswirkung aufgehoben. Gleichzeitig bleiben bei dieser Drehung die Rastelemente 9, 10 im Eingriff. Weiter bewirkt die Rechtsdrehung des ersten Zugstabes 5, die sich über die Rastelemente 9, 10 auf den zweiten Zugstab 8 überträgt, eine Linksdrehung des Zugstabes 8, durch die ebenfalls die Bremswirkung aufgehoben wird. Somit werden durch Bedienung des Rollos an der Handhabe 13 beide Zugstäbe 5, 8 gleichzeitig im aneinander gekoppelten Zustand bewegt. Bei Betätigung der Handhabe 14 an ihrem freien Ende nach rechts, so dass entsprechend ebenfalls eine nach links gerichtete Drehbewegung des Zugstabes 8 erfolgt, wird diese Drehbewegung aufgrund der Formgebung der Rastelemente 9, 10 nicht auf den Zugstab 5 übertragen. Nur in Bezug auf den Zugstab 8 wird die Bremswirkung aufgehoben. Gleichzeitig kommen die Rastelemente 9, 10 außer Eingriff, so dass sich die Kopplung zwischen den Zugstäben 5 und 8 löst und der Zugstab 8 danach allein bewegt werden kann. Nach Lösen der Kopplung der beiden Zugstäbe 5, 8 kann auch der Zugstab 5 allein bewegt werden. Der intuitiven Bedienbarkeit kommt entgegen, dass die Handhabe 13, 14 in der Auszugsrichtung der jeweiligen Rollobahn 4, 7 bewegt werden muss, um die Bremswirkung aufzuheben.

## Patentansprüche

1. Fensterrollo mit
- einem zwei seitliche Führungsprofile (1) aufweisenden Rahmen,
- einer am oberen Rahmenende angeordneten ersten Wickelwelle (3),
- einer auf der ersten Wickelwelle (3) aufgewickelten ersten Rollobahn (4),
- einem am freien Ende der ersten Rollobahn (4) angeordneten ersten Zugstab (5), der an den Führungsprofilen (1) beweglich geführt ist und wenigstens ein erstes Bremselement aufweist, das zur Festlegung des ersten Zugstabes (5) in einer gewünschten Position lösbar an wenigstens einem der Führungsprofile (1) angreift,
- einer am unteren Rahmenende angeordneten zweiten Wickelwelle (6),
- einer auf der zweiten Wickelwelle (6) aufgewickelten zweiten Rollobahn (7) und
- einem am freien Ende der zweiten Rollobahn (7) angeordneten zweiten Zugstab (8), der an den Führungsprofilen (1) beweglich geführt ist, wobei eine Koppeleinrichtung den ersten Zugstab (5) lösbar an den zweiten Zugstab (8) koppelt, wobei die Koppeleinrichtung ein am ersten Zugstab (5) angeordnetes erstes Rastelement (9) aufweist, das in ein dazu korrespondierendes, am zweiten Zugstab (8) angeordnetes zweites Rastelement (10) lösbar eingreift, wobei das erste und das zweite Rastelement (9, 10) durch Drehung des ersten und/oder des zweiten Zugstabes (5, 8) um dessen jeweilige Längsachse miteinander in Eingriff bringbar sind,
**dadurch gekennzeichnet,**
**dass** durch die Drehung des ersten und/oder des zweiten Zugstabes (5, 8) um dessen jeweilige Längsachse in einer ersten Drehrichtung das erste und das zweite Rastelement (9, 10) miteinander in Eingriff bringbar sind, wobei die Bremswirkung durch die Drehung des ersten und/oder zweiten Zugstabes (5, 8) um dessen jeweilige Längsachse aufhebbar ist, wobei die Drehung des ersten und/oder des zweiten Zugstabes (5, 8) in der ersten Drehrichtung gleichzeitig die Bremswirkung aufhebt.

2. Fensterrollo nach Anspruch 1, **dadurch gekennzeichnet, dass** der zweite Zugstab (8) wenigstens ein zweites Bremselement aufweist, das zur Festlegung des zweiten Zugstabes (8) in einer gewünschten Position lösbar an wenigstens einem der Führungsprofile (1) angreift.

3. Fensterrollo nach Anspruch 1 oder 2, **dadurch gekennzeichnet, dass** das erste und/oder das zweite Bremselement jeweils wenigstens einen am Ende des ersten bzw. zweiten Zugstabes (5, 8) angeordneten Bremsklotz (11, 12) umfasst, der die Bremswirkung durch Reibung an der Innenseite des als Hohlprofil ausgebildeten Führungsprofils (1) erzeugt.

4. Fensterrollo nach Anspruch 3, **dadurch gekennzeichnet, dass** der Bremsklotz (11, 12) auf der Längsachse des ersten bzw. zweiten Zugstabes (5, 8) angeordnet ist und eine längliche Formgebung aufweist, derart dass die Länge des Bremsklotzes (11, 12) größer und die Breite des Bremsklotzes (11, 12) kleiner ist als das Innenmaß des Hohlprofils.

5. Fensterrollo nach einem der Ansprüche 1 bis 4, **gekennzeichnet durch** eine auf die erste Wickelwelle (3) einwirkende erste Aufwickelfeder, deren Federkraft die erste Rollobahn (4) spannt.

6. Fensterrollo nach einem der Ansprüche 1 bis 5, **gekennzeichnet durch** eine auf die zweite Wickelwelle (6) einwirkende zweite Aufwickelfeder, deren Federkraft die zweite Rollobahn (7) spannt.

7. Fensterrollo nach den Ansprüchen 5 und 6, **dadurch gekennzeichnet, dass** die erste Rollobahn (4) am Außenumfang des ersten Zugstabes (5) und die zweite Rollobahn (7) am Außenumfang des zweiten Zugstabes (8) befestigt ist, wobei die erste und zweite Rollobahn (4, 7) bzgl. des Querschnitts des jeweiligen Zugstabes (5, 8) im Wesentlichen tangential verlaufen.

8. Fensterrollo nach einem der Ansprüche 1 bis 7, **dadurch gekennzeichnet, dass** die beiden miteinander im Eingriff stehenden Rastelemente (9, 10) durch Drehung des ersten und/oder des zweiten Zugstabes (5, 8) um dessen jeweilige Längsache in einer der ersten Drehrichtung entgegengesetzten zweiten Drehrichtung außer Eingriff bringbar sind.

9. Fensterrollo nach einem der Ansprüche 1 bis 8, **dadurch gekennzeichnet, dass** der erste und der zweite Zugstab (5, 8) im gekoppelten Zustand spaltfrei aneinander anliegen.

## Claims

1. Window roller blind with
- a frame having two lateral guide profiles (1),
- a first winding shaft (3) arranged at the upper frame end,
- a first roller blind web (4) wound up on the first winding shaft (3),
- a first pull rod (5) arranged at the free end of the first roller blind web (4), which first pull rod (5) is guided movably on the guide profiles (1) and has at least one first brake element which, in order to secure the first pull rod (5) in a desired position, engages releasably on at least one of the guide profiles (1),
- a second winding shaft (6) arranged at the lower frame end,
- a second roller blind web (7) wound up on the second winding shaft (6), and
- a second pull rod (8) arranged at the free end of the second roller blind web (7), which second pull rod (8) is guided movably on the guide profiles (1), wherein a coupling device couples the first pull rod (5) releasably to the second pull rod (8), wherein the coupling device has a first latch element (9) which is arranged on the first pull rod (5) and which engages releasably in a corresponding second latch element (10) arranged on the second pull rod (8), wherein the first and the second latch element (9, 10) can be brought into engagement with each other by rotation of the first and/or the second pull rod (5, 8) about its respective longitudinal axis,
**characterized in that** the first and the second latch element (9, 10) can be brought into engagement with each other by the rotation of the first and/or the second pull rod (5, 8) in a first direction of rotation about its respective longitudinal axis, wherein the braking action can be cancelled by the rotation of the first and/or second pull rod (5, 8) about its respective longitudinal axis, wherein the rotation of the first and/or the second pull rod (5, 8) in the first direction of rotation at the same time cancels the braking action.

2. Window roller blind according to Claim 1, **characterized in that** the second pull rod (8) has at least one second brake element which, in order to secure the second pull rod (8) in a desired position, engages releasably on at least one of the guide profiles (1).

3. Window roller blind according to Claim 1 or 2, **characterized in that** the first and/or the second brake element each comprises at least one brake block (11, 12) arranged at the end of the first or second pull rod (5, 8), which brake block (11, 12) generates the braking action by friction on the inner face of the guide profile (1) configured as a hollow profile.

4. Window roller blind according to Claim 3, **characterized in that** the brake block (11, 12) is arranged on the longitudinal axis of the first or second pull rod (5, 8) and has an elongate shape, in such a way that the length of the brake block (11, 12) is greater and the width of the brake block (11, 12) is smaller than the internal dimension of the hollow profile.

5. Window roller blind according to one of Claims 1 to 4, **characterized by** a first winding-up spring acting on the first winding shaft (3), the spring force of which first winding-up spring tensions the first roller blind web (4).

6. Window roller blind according to one of Claims 1 to 5, **characterized by** a second winding-up spring acting on the second winding shaft (6), the spring force of which second winding-up spring tensions the second roller blind web (7).

7. Window roller blind according to Claims 5 and 6, **characterized in that** the first roller blind web (4) is fastened on the outer circumference of the first pull rod (5) and the second roller blind web (7) is fastened on the outer circumference of the second pull rod (8), wherein the first and second roller blind web (4, 7) run substantially tangentially with respect to the cross section of the respective pull rod (5, 8).

8. Window roller blind according to one of Claims 1 to 7, **characterized in that** the two latch elements (9, 10) in engagement with each other can be disengaged by rotation of the first and/or the second pull rod (5, 8) about its respective longitudinal axis in a second direction of rotation counter to the first direction of rotation.

9. Window roller blind according to one of Claims 1 to 8, **characterized in that** the first and the second pull rod (5, 8) bear on each other without a gap in the coupled state.

## Revendications

1. Stator de fenêtre, comprenant :
- un cadre présentant deux profilés de guidage latéraux (1),
- un premier arbre d'enroulement (3) disposé à l'extrémité supérieure du cadre,
- une première bande de store (4) enroulée sur le premier arbre d'enroulement (3),
- une première barre de traction (5) disposée à l'extrémité libre de la première bande de store (4), qui est guidée de manière déplaçable sur les profilés de guidage (1) et qui présente au moins un premier élément de freinage qui s'engage de manière détachable au niveau d'au moins l'un des profilés de guidage (1) pour la fixation de la première barre de traction (5) dans une position souhaitée,
- un deuxième arbre d'enroulement (6) disposé à l'extrémité inférieure du cadre,
- une deuxième bande de store (7) enroulée sur le deuxième arbre d'enroulement (6) et
- une deuxième barre de traction (8) disposée à l'extrémité libre de la deuxième bande de store (7), qui est guidée de manière déplaçable sur les profilés de guidage (1), un dispositif d'accouplement accouplant de manière détachable la première barre de traction (5) à la deuxième barre de traction (8), le dispositif d'accouplement présentant un premier élément d'encliquetage (9) disposé sur la première barre de traction (5), qui s'engage dans un deuxième élément d'encliquetage (10) correspondant à celui-ci, disposé sur la deuxième barre de traction (8), le premier et le deuxième élément d'encliquetage (9, 10) pouvant être amenés en prise l'un avec l'autre par rotation de la première et/ou de la deuxième barre de traction (5, 8) autour de son axe longitudinal respectif,
**caractérisé en ce que**
le premier et le deuxième élément d'encliquetage (9, 10) peuvent être amenés en prise l'un avec l'autre par la rotation de la première et/ou de la deuxième barre de traction (5, 8) dans un premier sens de rotation autour de leur axe longitudinal respectif, l'effet de freinage pouvant être supprimé par la rotation de la première et/ou de la deuxième barre de traction (5, 8) autour de leur axe longitudinal respectif, la rotation de la première et/ou de la deuxième barre de traction (5, 8) dans le premier sens de rotation supprimant simultanément l'effet de freinage.

2. Store de fenêtre selon la revendication 1, **caractérisé en ce que** la deuxième barre de traction (8) présente au moins un deuxième élément de freinage qui s'engage de manière détachable avec au moins l'un des profilés de guidage (1) pour fixer la deuxième barre de traction (8) dans une position souhaitée.

3. Store de fenêtre selon la revendication 1 ou 2, **caractérisé en ce que** le premier et/ou le deuxième élément de freinage comprennent chacun au moins un patin de freinage (11, 12) disposé à l'extrémité de la première, respectivement de la deuxième, barre de traction (5, 8), qui génère l'effet de freinage par friction au niveau du côté intérieur du profilé de guidage (1) réalisé sous forme de profilé creux.

4. Store de fenêtre selon la revendication 3, **caractérisé en ce que** le patin de freinage (11, 12) est disposé sur l'axe longitudinal de la première, respectivement de la deuxième, barre de traction (5, 8) et présente une forme allongée de telle sorte que la longueur du patin de freinage (11, 12) soit supérieure à la dimension intérieure du profilé creux et que la largeur du patin de freinage (11, 12) soit inférieure à la dimension intérieure du profilé creux.

5. Store de fenêtre selon l'une quelconque des revendications 1 à 4, **caractérisé par** un premier ressort d'enroulement agissant sur le premier arbre d'enroulement (3), dont la force de ressort tend la première bande de store (4).

6. Store de fenêtre selon l'une quelconque des revendications 1 à 5, **caractérisé par** un deuxième ressort d'enroulement agissant sur le deuxième arbre d'enroulement (6), dont la force de ressort tend la deuxième bande de store (7).

7. Store de fenêtre selon les revendications 5 et 6, **caractérisé en ce que** la première bande de store (4) est fixée à la périphérie extérieure de la première barre de traction (5) et la deuxième bande de store (7) est fixée à la périphérie extérieure de la deuxième barre de traction (8), la première et la deuxième bande de store (4, 7) s'étendant essentiellement tangentiellement par rapport à la section transversale de la barre de traction respective (5, 8).

8. Store de fenêtre selon l'une quelconque des revendications 1 à 7, **caractérisé en ce que** les deux éléments d'encliquetage (9, 10) en prise l'un avec l'autre peuvent être désengagés l'un de l'autre par rotation de la première et/ou de la deuxième barre de traction (5, 8) autour de leur axe longitudinal respectif dans un deuxième sens de rotation opposé au premier sens de rotation.

9. Store de fenêtre selon l'une quelconque des revendications 1 à 8, **caractérisé en ce que** la première et la deuxième barre de traction (5, 8) s'appliquent l'une contre l'autre sans espacement dans l'état accouplé.
